# FASCICULE DE BREVET EUROPEEN

(11) **EP 1 819 216 B1**
(45) Date de publication et mention de la délivrance du brevet: **16.10.2013**
(21) Numéro de dépôt: 05817352.7
(22) Date de dépôt: 14.11.2005
(51) Int. Cl.: A01G 27/00, A01G 25/16

(54) **DISPOSITIFS MECANIQUES AUTONOMES DE COMMANDE D'ARROSAGE**
AUTONOME MECHANISCHE VORRICHTUNGEN FÜR GESTEUERTE BEWÄSSERUNG
STAND-ALONE MECHANICAL DEVICES FOR CONTROLLED WATERING

(30) Priorité: 29.11.2004 FR 0412614
(43) Date de publication de la demande: 22.08.2007
(73) Titulaire: Balet, Bernard, 13006 Marseille (FR)
(72) Inventeur: Balet, Bernard, 13006 Marseille (FR)
(74) Mandataire: Marek, Pierre
(86) Numéro de dépôt international: PCT/FR2005/002812
(87) Numéro de publication internationale: WO 2006/058976

(56) Documents cités:
- FR-A- 1 270 671
- FR-A- 1 380 569
- FR-A- 2 416 645
- FR-A- 2 856 239
- US-A- 5 269 337

## Description

L'invention se rapporte à l'arrosage des sols et elle concerne plusieurs dispositifs mécaniques autonomes, comportant une caractéristique originale commune, permettant d'assurer cette fonction dans les meilleures conditions .

L'arrosage de toute parcelle cultivée est une nécessité dans de nombreuses régions. Pour ce faire, on met en oeuvre, à partir d'une bouche d'eau sous pression, un ou plusieurs équipements d'arrosage opérant notamment par aspersion ou par distribution goutte à goutte. Pour alimenter d'une manière automatique ces différents équipements, il est fait appel à des électrovannes commandées par un programmateur électronique ou électromécanique qui détermine les instants successifs de départ et d'arrêt de l'arrosage. Les résultats ne peuvent pas être totalement satisfaisants car, malgré leur bonne connaissance du terrain, les utilisateurs de ces moyens ne peuvent prendre en compte la totalité des différents paramètres qui régissent le comportement des sols et des plantes vis à vis de l'eau. En outre, le coût de ces installations est important et la nécessité d'avoir sur place une source de courant électrique est une servitude, qu'il serait intéressant de pouvoir supprimer.

Plusieurs modèles d'électrovannes, disponibles sur le marché, sont utilisées pour commander des arrosages. La plupart de ces modèles comportent un solénoïde adapté à faire prendre deux positions stables déterminées à un noyau ferromagnétique solidaire du pointeau de commande d'un relais hydraulique, activé par la pression de l'eau et adapté à déclencher l'ouverture ou la fermeture de la vanne. Noyau et pointeau sont enfermés dans un fourreau étanche entouré par le solénoïde. L'expérience a prouvé que ce type d'électrovannes est particulièrement fiable.

Pour ce qui concerne les couches superficielles des sols (moins de 30 cm environ), dans lesquelles poussent la plupart des plantes, elles ont des comportements vis à vis de l'eau qui dépendent de nombreux paramètres et notamment de leur perméabilité, de leur capillarité, de leur capacité de rétention, de leur coefficient d'évaporation, de leur exposition aux vents domi-nants et finalement de la nature des couches sous-jacentes. Pour ce qui concerne les plantes elles-mêmes, on rappellera qu'un arrosage en plein soleil est dommageable pour les feuilles (effet de loupe). A cet inconvénient, il faut ajouter qu'un arrosage en plein soleil entraîne une perte par évaporation immédiate qui peut atteindre 70%. Ces paramètres et ce savoir sont bien connus des specialistes concernés, mais ceux d'entre eux qui se sont intéressés à la construction de dispositifs purement mécaniques (sans source de courant électrique associée), pour la commande automatique d'arrosage, n'ont jusqu'à présent pas pu les prendre tous en compte.

Dans le brevet français N° 75.04479, Delattre décrit un dispositif mécanique autonome de commande d'arrosage comportant un bac profond à paroi perforée, monté bistable sur un couteau, qui contient un échantillon du sol et de plantes et est équilibré par un contrepoids. Le basculement du bac, sous l'effet d'un arrosage ou d'une évaporation et d'un drainage, commande directement une vanne mécanique. Ce dispositif encombrant et lourd est représentatif de la majorité des paramètres concernés et il peut engendrer une force suffisante pour directement commander la vanne. Mais il est peu fiable du fait de la présence évolutive des plantes, il ne prend pas en compte l'ensoleillement et il ne permet de modifier ni la durée d'un arrosage ni celle de l'intervalle entre deux arrosages consécutifs.

Dans le brevet français N° 79.16748, Brossard décrit un dispositif mécanique autonome de commande d'arrosage comportant une vanne mécanique, directement commandée par un fléau pivotant, dont une extrémité porte une nacelle à parois perforées, contenant un corps absorbant, et l'autre, un contrepoids. Ce dispositif est simple et réaliste mais la commande directe d'une vanne mécanique, soumise à la pression de l'eau, par le seul mouvement oscillant du fléau, demande à celui-ci une force d'appui relativement importante qui n'est pas disponible. En outre, il ne comprend aucun moyen pour régler la durée et/ou l'intervalle des arrosages et il ignore l'ensoleillement.

Dans le brevet français N° 1.300.228, Castelli décrit un dispositif mécanique autonome de commande d'arrosage qui comprend un bac, susceptible d'être rempli par l'eau de pluie ou d'arrosage, auquel est associé un flotteur pivotant devant directement déclencher une vanne mécanique. Ce dispositif mécanique ne tient compte que de l'évaporation. Il est donc inadapté au problème posé. En outre, comme les précédents, il ne comporte aucun moyen de régler la durée et l'intervalle des arrosages et il ignore l'ensoleillement.

Dans le brevet français N° 1.380.569, Raucourt décrit un dispositif mécanique autonome de commande d'arrosage, comportant une vanne à clapet, directement commandée par un fléau, monté bistable sur un pivot, dont une extrémité porte un bac rempli de terre et l'autre un contrepoids. Le bac n'étant pas perforé, ce dispositif n'est, comme le précédent, représentatif que de l'évaporation du sol. De plus, il ignore l'ensoleillement et il ne comporte aucun moyen pour régler la durée et/ou l'intervalle des arrosages et sa vanne à clapet nécessite une force de déclenchement importante que le seul basculement du fléau ne peut pas fournir. On connait aussi du document FR-A-1270671 un dispositif mécanique autonome de commande d'arrosage.

Chacun de ces dispositifs mécaniques connus de commande d'arrosage comporte un organe simulateur qui reproduit un certain nombre de paramètres régissant le comportement des sols vis à vis de l'eau, mais ce nombre est en général trop réduit. et aucun moyen n'est prévu pour régler la durée et/ou l'intervalle des arrosages et pour tenir compte de l'ensoleillement. De plus, l'effiçacité des différents moyens utilisés pour déclencher la fermeture ou l'ouverture de la vanne est suspecte, du fait du trop grand effort qui leur est demandé.

L'objet général de l'invention est un dispositif mécanique autonome de commande d'arrosage dont le déclenchement peut être assuré par l'action d'une force de très faible amplitude.

Le premier objet particulier de l'invention est un dispositif mécanique autonome de commande d'arrosage, qui permette de constamment adapter la quantité d'eau distribuée, aux besoins réels de la parcelle et/ou des ensembles de bacs ou de pots à arroser.

Le deuxième objet particulier de l'invention est un dispositif mécanique autonome de commande d'arrosage, qui soit économique, simple à construire et facile à utiliser.

Le troisième objet particulier de l'invention est un premier dispositif mécanique autonome de commande d'arrosage des sols qui comporte un organe simulateur simple, léger et peu encombrant, qui prenne en compte le plus grand nombre possible de paramètres régissant le comportement des sols vis à vis de l'eau.

Le quatrième objet particulier de l'invention est un premier dispositif mécanique autonome de commande d'arrosage qui permette, au moyen d'un réglage simple, de modifier l'intervalle entre deux arrosages, dans la mesure où il dépend du sol, en ajustant simultanément les caractéristiques, capillarité, perméabilité et capacité de rétention d'eau de l'organe simulateur, en fonction de celles du sol concerné.

Le cinquième objet particulier de l'invention est un premier dispositif mécanique autonome de commande d'arrosage qui permette, au moyen d'un autre réglage simple, de déterminer la durée d'un arrosage, dans la mesure où cette durée dépend du sol.

Le sixième objet particulier de l'invention est un premier dispositif mécanique autonome de commande d'arrosage des sols qui permet d'interdire tout nouvel arrosage quand le rayonnement solaire est trop intense.

Le septième objet particulier de l'invention est un deuxième dispositif mécanique autonome de commande d'arrosage, dérivé du premier, spécialement adapté à l'arrosage goutte à goutte de bacs d'intérieur,

Le huitième objet particulier de l'invention est un troisième dispositif mécanique autonome de commande d'arrosage, adapté à tout type d'arrosage, notamment par aspersion ou par goutte à goutte.

Selon l'invention, un dispositif mécanique autonome de commande d'arrosage comprenant :
un organe simulateur, autant que possible représentatif du comportement vis-à-vis de l'eau du sol concerné, notamment de la teneur en eau de ce sol;
- un capteur comportant un élément mobile sensible à cette teneur en eau;
- des moyens solidaires de cet élément mobile, adaptés à déclencher le fonctionnement d'une vanne installée entre une source d'eau sous pression et au moins un équipement d'arrosage ;
est caractérisé en ce que :
- la vanne comporte un relais hydraulique, adapté à déclencher son ouverture ou sa fermeture ;
- ce relais hydraulique est équipe d'un pointeau de commande, solidaire d'un noyau ferromagnétique associé à un ressort ;
- l'élément mobile du capteur comporte un aimant à déplacement vertical, adapté à faire prendre deux positions stables à ce noyau ferromagnétique, cet aimant est un anneau à polarisation axiale, engagé libre autour du fourreau du noyau ferromagnétique de la vanne.

De la sorte, à partir d'une électrovanne du commerce, débarrassée de son solénoïde de commande et incorporée au dispositif autonome de commande d'arrosage selon l'invention, on réalise un dispositif mécanique à commande magnétique, qui comprend deux moyens successifs de déclenchement, le second amplifiant l'action du premier. Le premier moyen est le déplace-ment d'un champ magnétique, agissant sur un noyau ferromagnétique bistable solidaire d'un pointeau, et le second, un relais hydraulique activé par ce pointeau et par la pression d'eau. Ce qui lui donne une fiabilité maximale, puisqu'il ne nécessite que des forces de déclenchement négligeables de l'élément mobile du capteur. En conséquence, les positions extrêmes de l'aimant de cet élément mobile, qui correspondent aux teneurs en eau minimale et maximale de l'organe simulateur de sol, déclenchent aisément et brusquement le début ou la fin de l'arrosage.

Un tel dispositif autonome de commande d'arrosage peut prendre trois formes principales de réalisation. Dans la première et la deuxième de ces formes, l'organe simulateur de sol comporte un composant plus ou moins représentatif du sol et dans la troisième, c'est un échantillon de terre prélevée sur le sol concerné qui est retenu à cet effet. La première forme de réalisation concerne l'arrosage de plein air par aspersion et la deuxième, l'arrosage goutte à goutte. La troisième forme de réalisation de l'invention concerne tous les types d'arrosage.

Selon les caractéristiques de la première et de la deuxième formes de réalisation d'un dispositif mécanique autonome de commande d'arrosage selon l'invention;
- l'élément mobile du capteur est un bras de levier, solidaire d'un corps absorbant, monté en porte-à-faux oscillant autour d'un axe fixe ;
- un ressort installé au voisinage de cet axe, équilibre le poids total du bras de levier et de sa charge, lorsque le corps absorbant possède une teneur moyenne en eau déterminée.

Avec ces première et deuxième formes de réalisation, la construction de deux dispositifs autonomes purement mécaniques de commande d'arrosage, selon l'invention, est particulièrement simple et efficace. Les composants de ces dispositifs sont définis et assemblés selon le principe de la séparation des fonctions et chacun possède une fiabilité propre. Il en est de même de l'aimant en anneau à polarisation axiale, dont l'action est identique à celle du solénoïde qu'il remplace pour la commande de la vanne. De la sorte, lorsque le poids du corps absorbant saturé amène le bras de levier à prendre une position basse extrême, l'aimant fait brusquement déplacer le noyau et le pointeau, ce qui déclenche le fonctionnement du relais hydraulique qui provoque la fermeture de la vanne. Symétriquement, lorsque le poids du corps absorbant est suffisamment faible pour amener le bras de levier à prendre une position haute extrême, l'aimant fait brusque-ment déplacer en sens contraire le noyau ferromagnétique mobile et le pointeau. Ce qui amène le relais hydraulique à commander l'ouverture de la vanne.

Selon un ensemble d'autres caractéristiques particulières de la première forme de réalisation d'un dispositif autonome d'arrosage par aspersion selon l'invention :
- l'organe simulateur comprend en outre, au moins sous la totalité du corps absorbant, une coupelle allongée, notablement plus large que lui ;
- la partie basse du corps absorbant peut s'engager dans cette coupelle et prendre appui sur son fond;
- cette coupelle est inclinable autour d'un axe longitudinal.

Grâce à ces dispositions, une partie de l'eau qui arrose le dispositif selon l'invention imprègne le corps absorbant et une autre s'accumule dans la coupelle. Le volume d'eau susceptible d'être ainsi retenu est réglable par inclinaison de la coupelle, laquelle, de ce fait, déborde plus ou moins. L'angle d'inclinaison est déterminé expérimentalement. Dans ces conditions, est réalisé un ajustement de la perméabilité, de la capillarité et de la capacité de rétention d'eau de l'organe simulateur, constitué par l'association du corps absorbant et de la coupelle inclinée, qui forme ainsi un ensemble représentatif des couches superficielles à arroser. A cette action s'ajoute une certaine simulation de la capacité de rétention d'eau afférente aux couches sous-jacentes. Suivant les caractéristiques des deux éléments constituant l'organe simulateur de sol, d'une part, et l'état de l'environnement climatique du lieu, d'autre part, la perte en eau de l'organe simulateur peut durer de quelques heures à quelques jours. Cette perte en eau provient d'une évaporation de l'eau que le corps absorbant aspire par capillarité puis, après assèchement de la coupelle, de l'eau que finalement il retient. Cette évaporation dépend de l'hygrométrie et de la température de l'air, de l'ensoleillement du lieu et de l'intensité du vent. Dans ces conditions, le corps absorbant étant ce qu'il est par construction, l'inclinaison de la coupelle sur son axe constitue l'ajustage expérimental de la part afférente au sol particulier concerné, dans l'intervalle de temps entre deux arrosages.

Selon une autre caractéristique particulière de ce dispositif, au-dessus du corps absorbant est installé un auvent coulissant, constituant un parapluie à déploiement variable pour ce corps.

Grâce à cette disposition, seule une fraction réglable de la quantité d'eau, qui tombe sur le dispositif selon l'invention, est admise dans le corps absorbant. De la sorte, pour une intensité donnée d'arrosage, on peut aisément régler la durée de cet arrosage, depuis une durée minimale, déterminée par la capacité de rétention d'eau du seul corps absorbant, qui en fixe le poids maximal, lorsque l'auvent de protection est en retrait, jusqu'à une durée maximale, lorsque cet auvent est complètement avancé et protège la majeure partie du corps absorbant de tout arrosage.

Selon une autre caractéristique particulière de ce dispositif, un organe thermostatique, sensible au rayonnement solaire, protégé de la pluie et pourvu d'une butée rétractable à position réglable, est installé fixe au-dessus du bras de levier afin de pouvoir bloquer la remontée de ce bras, lorsque l'intensité de ce rayonnement dépasse un seuil déterminé et, dans le cas contraire, à laisser ce bras remonteur.

Grâce à cette disposition, aucun nouvel arrosage ne peut avoir lieu lorsque le rayonnement solaire est trop intense. Ce qui évite d'abîmer les feuilles des plantes et d'arroser avec perte importante d'eau.

Selon une autre caractéristique de ce dispositif, celui-ci comprend un cadre rigide en forme de U couché, ayant deux branches horizontales et un montant vertical ;
- la branche supérieure sert d'appui pour l'organe thermostatique ;
- la branche supérieure sert également d'appui pour l'auvent coulissant;
- la branche inférieure sert d'appui pour le ressort d'équilibrage du bras de levier ;
- la branche inférieure est percée d'un trou traversé par le fourreau du noyau et du pointeau ;
- la branche inférieure comporte un support pour l'axe de rotation de la coupelle,
- le montant vertical sert de support pour l'axe fixe du bras de levier.

Grâce à ces dispositions, le dispositif autonome et purement mécanique de commande d'arrosage selon l'invention est particulièrement simple, léger et peu encombrant.

Selon un ensemble de caractéristiques particulières, complémentaires des précédentes,
- la branche supérieure du cadre rigide comporte un trou dans lequel est engagé un ergot fixé à l'extrémité du fourreau ;
- la branche supérieure du cadre est en appui sur l'extrémité du fourreau et le cadre tout entier est monté libre en rotation autour de ce fourreau ;
- un empennage est fixé au montant vertical et/ou à la branche supérieure du cadre.

Grâce à ces dispositions, le dispositif selon l'invention fonctionne aussi en girouette et le corps absorbant de ce dispositif est toujours orienté face aux vents dominants. Ce qui permet une bonne simulation de l'assèchement, sous l'action du vent, des couches superficielles du sol à arroser.

Selon l'invention, un dispositif mécanique autonome de commande d'arrosage goutte à goutte d'intérieur, conforme à la deuxième forme de réalisation définie plus haut, est caractérisé en ce que le conduit disposé en aval de la vanne est pourvu d'une prise d'eau raccordée à un bec verseur adapté à verser goutte à goutte de l'eau au-dessus du corps absorbant.

Grâce à ces dispositions, un dispositif autonome et purement mécanique de commande d'arrosage goutte à goutte de plantes d'intérieur ou de serre, qui est donc uniquement sensible à l'hygrométrie et la température du local, est réduit à une forme de réalisation minimale qui ne comporte que la combinaison des seuls composants nécessaires à ce modèle particulier.

Selon l'invention, un dispositif mécanique autonome de commande d'arrosage conforme à la troisième forme de réalisation définie plus haut, est caractérisé en ce que :
- l'organe simulateur de sol comprend un bac témoin et une cuvette associée ;
- le bac témoin est destiné à contenir un échantillon de terre et au moins une plante ;
- l'échantillon de terre est représentatif du sol à arroser et, dans le cas de bacs ou de pots, au moins de la qualité de la terre qu'ils contiennent ;
- la cuvette est destinée à contenir de l'eau ;
- le fond du bac témoin comporte une zone périphérique percée de trous, qui repose sur le fond de la cuvette, de préférence par l'intermédiaire d'un ou de plusieurs intercalaires ;
- l'élément mobile du capteur est un flotteur, installé libre dans un logement aménagé entre le fond de la cuvette et le fond du bac témoin ;
- le flotteur comporte un aimant en anneau, engagé libre autour du fourreau du noyau ferromagnétique bistable de commande du pointeau du relais hydraulique de la vanne.

Selon des caractéristiques particulières possibles du dispositif précédent, l'équipement d'arrosage installé en aval de la vanne est :
- soit un ensemble de becs verseurs, respectivement adaptés à laisser tomber des gouttes d'eau sur la terre du bac témoin et sur celle des bacs à arroser ;
- soit un ensemble de becs verseurs, respectivement adaptés à laisser couler de minces filets d'eau directement dans la cuvette du bac témoin et dans celles des bacs à arroser, ces cuvettes étant équipés de couvercles en forme de couronne, pour minimiser l'évaporation de leur eau ;
- soit un dispositif d'arrosage par aspersion du sol concerné ou d'un ensemble de bacs à arroser, lorsque le bac témoin et sa cuvette associée sont installés dans la zone aspergée.

Avec cette troisième forme de réalisation, la construction d'un dispositif autonome purement mécanique de commande de tous types d'arrosage, selon l'invention, est possible et particulièrement simple et efficace. Ses composants sont également définis et assemblés selon le principe de la séparation des fonctions et chacun possède une fiabilité propre. De la sorte, lorsque le niveau d'eau dans la cuvette amène le flotteur à prendre une position basse extrême, son aimant provoque l'ouverture de la vanne. Symétriquement, lorsque le niveau d'eau dans la cuvette arrive à une hauteur déterminée, le flotteur suit et son aimant fait brusquement déplacer en sens contraire le noyau ferromagnétique mobile et le pointeau. Ce qui amène le relais hydraulique à commander la fermeture de la vanne.

On notera que l'échantillon de terre contenu dans le bac témoin doit être représentatif du sol à arroser par aspersion, c'est-àrdire avoir une surface minimale à définition large (au moins une dizaine de décimètres carrés) mais de plus une hauteur et une qualité de terre sensiblement identiques à celles de la couche superficielle cultivée du sol en question. En revanche, dans le cas de bacs à arroser, le volume de la terre dans le bac témoin peut être différent de ceux des bacs à arroser. En effet, le réglage du débit du bec verseur de ce bac témoin détermine un temps d'arrosage de référence, de 15 à 20 minutes par exemple, à partir duquel les débits particuliers des becs verseurs des bacs à arroser sont ajustés pour respectivement correspondre aux volumes particuliers de terre de ces différents bacs.

Selon une première caractéristique complémentaire des précédentes, les intercalaires installés entre les zones périphériques percées de trous du bac témoin et le fond de la cuvette associée ont une hauteur relativement importante, permettant d'aménager un logement approprié pour le flotteur monté libre autour du noyau bistable de la vanne.

Selon une seconde caractéristique complémentaire des précédentes, la cuvette associée comporte un fond à deux niveaux, un fond haut en couronne sur lequel reposent des intercalaires à forte capillarité et un fond bas central sur lequel peut reposer le flotteur.

Grâce à la première de ces deux dernières dispositions, le modèle de bac témoin, utilisable pour réaliser un dispositif autonome de commande d'arrosage selon l'invention, peut être quelconque. Grâce à la seconde de ces dispositions, le déclenchement d'ouverture de la vanne peut être réglé de manière à se faire assez longtemps après le moment de fin de continuité capillaire entre le niveau supérieur de l'eau dans le fond bas de la cuvette et les zones percées du fond du bac témoin. Ce qui permet à l'échantillon de terre du bac témoin de subir un début d'assèchement qui sera ensuite appliqué au sol ou aux bacs à arroser. Ce qui est connu pour être bon pour la santé des plantes.

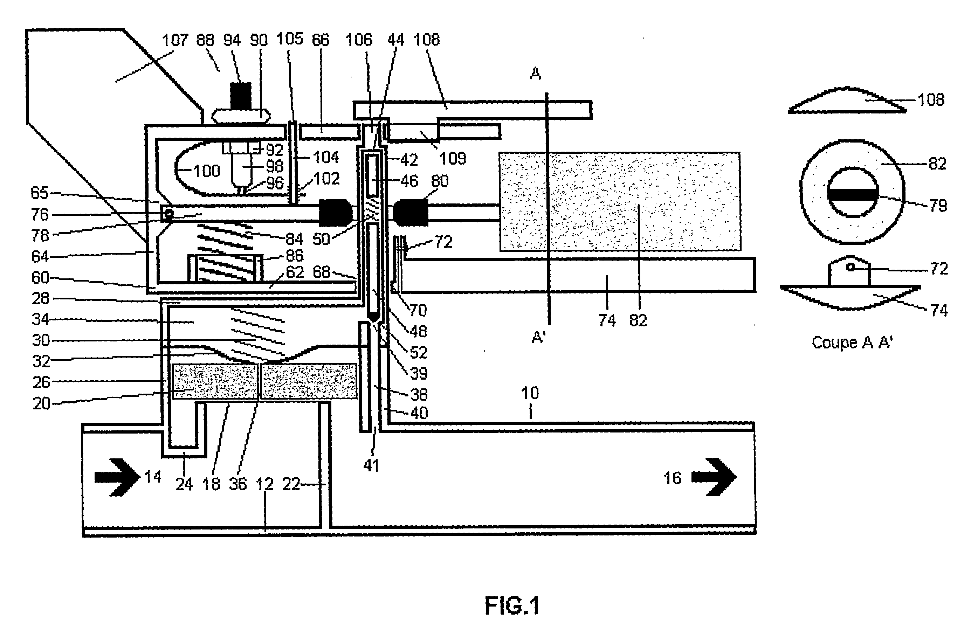

Les caractéristiques et avantages de l'invention ressortiront d'une manière plus précise de la description ci-après, faite en référence à trois formes de réalisation, présentées à titre d'exemples non limitatifs, en référence aux dessins annexés dans lesquels les figures 1, 2 et 3 représentent respectivement des vues schématiques en coupe de trois dispositifs mécaniques autonomes de commande d'arrosage, selon l'invention, le premier par aspersion en plein air, le deuxième par goutte à goutte en intérieur et le troisième par tous types d'arrosage.

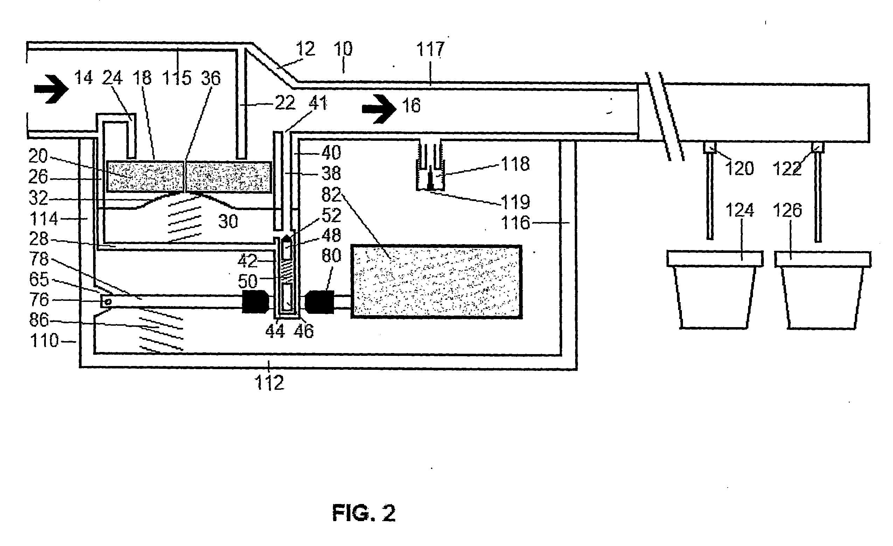

Selon les figures 1 et 2, sont représentés deux dispositifs mécaniques autonomes de commande d'arrosage extérieur ou intérieur, selon la première et la deuxième formes de réalisation de l'invention. Ces dispositifs incorporent tous les deux une vanne mécanique 10, à relais hydraulique de déclenchement, constituée par une électrovanne du commerce, privée de son solénoïde de commande. Cette vanne 10 comprend un tronçon 12 de conduit en plastique rigide à section circulaire, adapté à être inséré à l'horizontale, au moyen de raccords standards non représentés, entre une canalisation d'eau sous pression disposée en amont (flèche 14), et un équipement d'arrosage, installé en aval (flèche 16). La vanne 10 est constituée par un piston obturateur 20 coopérant avec une ouverture circulaire 18, formée par la réunion de deux cloisons transversales courbes 22-24, respectivement solidaires de deux zones diamétralement opposées du conduit 12. Le piston obturateur 20 est adapté à coulisser dans un cylindre 26 qui comporte un fond 28, sur lequel prend appui un ressort 30, adapté à fermement appliquer-le piston 20 sur le bord de l'ouverture circulaire 18. Le cylindre 26 est partagé en deux par une membrane souple 32, dont la périphérie est fixée à la paroi du cylindre et la partie centrale, fixée au piston 20. La chambre 34, ainsi constituée entre la membrane souple 32 et le fond 28, communique avec l'amont de la cloison transversale courbe 22 par un canal fin 36, percé au centre du piston 20 et avec l'aval de cette cloison 22 par un autre canal fin 38, percé dans une protubérance 40, commune au cylindre 26 et au tronçon 12. Le canal fin 38 comporte un orifice en tronc de cône 39 et un autre orifice 41 qui débouche à l'aval de la cloison courbe 22.

A la protubérance 40 et au plafond 28, est attaché un fourreau cylindrique 42 qui comporte un fond 44 et un orifice communiquant avec la chambre 34 et le conduit 38. Dans ce fourreau 42, sont installés deux noyaux ferromagnétiques 46 et 48, séparés par un ressort 50, de faible raideur, légèrement comprimé dans son état de repos. Le noyau 46 est fixé au fond 44 du fourreau 42 et le noyau 48 est mobile et adapté à coulisser dans le fourreau 42. Le noyau 48 est une petite tige dont l'extrémité libre est équipée d'un embout souple 52, constituant un pointeau adapté à obturer l'orifice 39 du canal fin 38.

Selon la figure 1, le cadre en plastique rigide d'un dispositif 60 mécanique autonome de commande d'arrosage de plein air, selon l'invention, est installé, en appui tournant libre, sur la vanne 10. Ce cadre du dispositif 60 a environ quatre centimètres de large et est en forme de U couché à l'horizontale, avec une branche inférieure courte 62, un montant vertical 64 et une branche supérieure longue 66. La branche inférieure 62 est percée d'une ouverture circulaire 68 et pourvue, à son extrémité libre, d'un petit support vertical 70, percé d'un trou traversé par un axe fixe 72, qui peut être une simple vis. Sur cet axe, est montée orientable une coupelle allongée 74, d'environ dix centimètres de long, cinq de large et deux de creux. Le fond de la coupelle 74 peut avantageusement avoir un profil en arc de cercle et cette coupelle, être la partie pleine d'un cylindre dont le reste de paroi (non représenté) est une grille, entourant le corps absorbant 82 et le protégeant des différents impacts qu'il est susceptible de subir.

Le montant vertical 64 comporte en son milieu deux bossages 65, dans lesquels est inséré un axe de rotation 76, parallèle à la ligne de raccordement de la branche 62. Sur cet axe 76, est monté en porte à faux oscillant, un bras de levier rigide 78, ayant environ quinze centimètres de long et mêmes largeur et nature que le cadre en forme de U du dispositif 60. Le bras de levier 78 est pourvu, dans sa partie centrale, d'un aimant en anneau 80, à polarisation axiale. L'extrémité libre 79 du bras de levier 78 est plate et elle porte un corps absorbant 82, de forme cylindrique ou légèrement tronconique, ayant un diamètre maximal d'environ trois centimètres à son extré-mité la plus proche de l'axe de rotation 76 et six centimètres de long. Ce corps absorbant 82 est un manchon creux, en tissu synthétique hydrophile, engagé de force sur cette extrémité 79. Lorsque le bras de levier 78 est en butée basse, le corps absorbant 82 prend appui sur le fond de la coupelle 74.

Au voisinage de l'axe de rotation 76 est installé, entre le bras de levier 78 et la branche inférieure 62 du dispositif 60, un ressort en hélice 84, engagé dans une bague 86, collée à cette branche 62. L'écart entre cette bague 86 et l'axe 76 est fixé une fois pour toutes, afin que le ressort 84 puisse équilibrer le poids total de référence du bras de levier 78 et de ses charges. Dans cette position d'équilibre, le corps absorbant 82 retient une masse d'eau de référence, qui simule une teneur en eau moyenne déterminée du sol concerné.

Sur la branche supérieure 66 du dispositif 60, sous un capot transparent (non représenté), est fixé un élément thermostatique 88 à collerette 90, au moyen d'un écrou 92. Un tel élément thermostatique 88 (un article disponible dans le commerce), comprend, dans une capsule 94, un mélange thermo-dilatable, à haute conductivité thermique (poudre métallique et cire, par exemple). Ce mélange est séparé par diaphragme d'un piston solidaire d'un doigt 96, débouchant d'une gaine souple 98, pourvu d'un ressort de rappel 100, en forme de lame courbe fixée par l'écrou 92 à la branche 66 du dispositif 60. Le doigt 96 est susceptible de se déplacer de quelques millimètres, lorsque la température de la capsule 94 passe de 20 à 50°C, sous l'action du rayonnement solaire. En réponse au déplacement maximal du doigt 96, le bras de levier 62 est empêché de remonter au-dessus d'une position déterminée, fixée par une butée rétractable 102, à position réglable. Cette butée est l'extrémité filetée d'une tige 104, vissée dans un trou taraudé, pratiqué à l'extrémité libre du ressort à lame 100, dont la tête à fente 105 traverse librement un trou pratiqué à cet effet dans la branche supérieure 66 du cadre du dispositif 60. Cette butée 102 détermine la position maximale haute que peut prendre le bras de levier 78, lorsque la température de la capsule 94 de l'organe thermostatique 88 a dépassé un seuil déterminé.

La branche supérieure 66 du cadre du dispositif 60 est percée d'un autre trou dans lequel est engagé un ergot 106, constituant un axe de rotation fixé sur le fond 44 du fourreau 42. De la sorte, la face inférieure de la branche supérieure 66 du cadre du dispositif 60 peut être installée en appui sur le fond 44 du fourreau 42. Dans ces conditions, cette branche 66 est montée tournante autour de l'axe 106 et tout le cadre du dispositif 60, monté tournant autour du fourreau 42, cependant que ce même fourreau traverse et le trou 68, pratiqué dans la branche inférieure 62 du cadre du dispositif 60, et l'aimant en anneau 80 du bras de levier 78 de ce dispositif. Le dispositif 60 comporte, fixé au montant 64 et à la branche supérieure 66 de son cadre, un empennage 107 à double fonction. La première est d'équilibrer par sa masse l'ensemble tournant du dispositif 60 en appui sur son pivot 44, lorsque le corps absorbant 82 a une teneur en eau moyenne de référence. La seconde est de constituer une girouette solidaire du dispositif 60.

Sur la branche supérieure 66 du cadre du dispositif 60, est en outre monté coulissant avec frottement, au moyen de crochets latéraux 109 engagés sur les bords de cette branche 66, un auvent à toit courbe 108, constituant un parapluie à déploiement réglable, placé au-dessus du corps absorbant 82.

Selon la figure 2, qui représente la deuxième forme de réalisation de l'invention, une vanne 10, à relais hydraulique de déclenchement, identique à celle de la figure 1, est installée au-dessus d'un dispositif mécanique autonome 110, de commande d'arrosage intérieur. Ce dispositif 110 comprend un cadre rigide en forme de U droit, ayant une base horizontale 112 et deux montants verticaux de même longueur 114-116, dont les bords supérieurs sont découpés en arc de cercle. Sur ces bords reposent les extrémités amont 115 et aval 117 du conduit 12 de la vanne 10. Le dispositif 110 comporte plusieurs éléments actifs identiques à ceux du dispositif 60 de la figure 1, à savoir : bossages 65, axe de rotation 76, bras de levier 78, aimant en anneau 80, corps absorbant 82 et ressort d'équilibrage 86. Dans la position la plus basse du bras de levier 78, le fourreau 42 de la vanne 10 n'est plus engagé dans l'aimant en anneau 80 et, dans la position la plus haute de ce bras, cet aimant 80 se place à mi-chemin entre les noyaux ferromagnétiques 46-48. Au-dessus du corps absorbant 82 est installé, dans la partie aval 117 du tronçon de conduit 12 de la vanne 10, un organe 118 d'arrosage goutte à goutte préréglé, pourvu d'un pointeau de réglage 119. A l'extrémité du tronçon aval 117 du conduit 12, sont installés plusieurs organes d'arrosage goutte à goutte, tels 120-122, identiques à l'organe 118, disposés juste au-dessus de bacs, tels 124-126, contenant des plantes d'intérieur nécessitant des arrosages goutte à goutte déterminés.

On va tout d'abord exposer en détail le fonctionnement d'une vanne 10, constituée à partir d'une électrovanne disponible dans le commerce, débarrassée de son solénoïde de commande électrique. Dans cet état, cette vanne devient un composant nouveau, une vanne à commande magnétique, qui fonctionne en réponse au déplacement d'un aimant mobile. Lorsque la vanne 10 est ouverte, le piston obturateur 20 est écarté de l'ouverture 18 de la vanne et lorsqu'elle est fermée, ce piston est en appui sur le bord de cette ouverture. Lorsque, sous l'action de l'aimant 80, l'embout 52 du noyau ferromagnétique bistable 48, opère en pointeau et vient obturer l'orifice 39 du canal fin 38, la chambre 34 est privée de communication avec ce canal 38 et donc avec l'aval de la cloison transversale courbe 22. A cet instant, la vanne 10 est encore ouverte et son piston obturateur 20 est encore en position écartée. Par le conduit d'égalisation des pressions, que constitue le canal central fin 36 du piston obturateur 20, la pression de l'eau en amont de la cloison 22 se transmet assez rapidement à la chambre 34. Les pressions de chaque côté de la membrane souple 32 de la chambre 34 s'équilibrent progressivement. Dès que cet équilibre est atteint, le ressort 30 de la chambre 34 est en mesure de pousser le piston 20 jusqu'à ce que celui-ci vienne obturer l'ouverture 18 de la vanne 10. Symétriquement, lorsque en réponse à un déplacement de l'aimant 80, l'embout souple 52 du noyau 48 quitte son appui sur l'orifice 39 du canal fin 38, la chambre 34 se retrouve en communication avec ce canal 38 et donc avec l'aval de la cloison transversale 22. A cet instant, le piston obturateur 20 de l'ouverture 18 de la vanne 10 est encore en appui sur l'ouverture 18 et cette vanne est fermée. A travers l'orifice inférieur 41 du conduit fin 38 qui débouche en aval de la cloison courbe 22, la pression de l'eau dans la chambre 34 diminue et devient assez rapidement égale à la pression en aval de cette cloison 22. Le ressort 30 de la chambre 34 est alors comprimé par le piston 20, soumis à la pression de l'eau en amont de la cloison 22, qui progressivement libère l'ouverture 18 de la vanne 10 jusqu'à l'ouvrir complètement.

Lorsqu'au cours d'un arrosage, le poids total du bras de levier 78, de l'aimant 80 et du corps absorbant 82, simulateur de sol et collecteur d'eau, devient supérieur à la force maximale engendrée par le ressort d'équilibrage 86, le bras de levier 78 s'abaisse jusqu'à une butée basse, constituée par le fond de la coupelle 74, avec lequel prend contact le bas du corps absorbant légèrement tronconique 82. A cet instant, le noyau ferromagnétique 48, toujours attiré par le noyau fixe 46, tous deux précédemment magnétisés par la présence proche de l'aimant en anneau 80, comprime le ressort 50 mais l'écartement progressif de l'aimant 80, monté sur le bras de levier 78, diminue rapidement l'attraction entre les deux noyaux. Cette force d'attraction baisse jusqu'à devenir légèrement inférieure à la force de compression du ressort 50. A cet instant, sous l'action de ce ressort 50 qui le repousse, le noyau 48 quitte brusque-ment sa position haute et amène le pointeau 52 à obturer l'orifice 39 du canal fin 38. Ce qui à rapidement pour effet, comme cela à été dit plus haut, de provoquer la fermeture de la vanne.

Lorsque par évaporation de l'eau de la coupelle 74 puis de celle du corps absorbant 82, le poids de ce corps absorbant arrive à une valeur minimale, le bras de levier 78 atteint sa position haute extrême, le noyau ferromagnétique 48, attiré par l'aimant en anneau 80 monté sur ce bras et par le noyau 46 à nouveau magnétisé, est soumis à une force qui s'est rapprochée progressivement de celle engendrée par le ressort comprimé 50, jusqu'à lui devenir supérieure. A cet instant, cette force met fin au maintien en butée basse de ce noyau 48 qui se rapproche alors brusquement de l'aimant 80 et du noyau 46. Ce qui a pour effet de déboucher l'orifice 39 du canal fin 38 et, comme cela a été dit plus haut, de rapidement provoquer l'ouverture de la vanne 10.

Cette vanne 10 reste ouverte tant que le bras de levier 78 n'est pas redescendu jusqu'à sa positon basse extrême, à savoir le fond de la coupelle 74, c'est-à-dire aussi longtemps que le corps absorbant 82 retient une quantité d'eau inférieure au seuil de fin d'arrosage, correspondant à une teneur en eau maximale du sol. Comme cela a été dit plus haut, l'inclinaison de la coupelle 74 autour de son axe longitudinal détermine la quantité d'eau complémentaire qui ajuste à la réalité du sol concerné, les simulations de perméabilité, de capillarité et de capacité de rétention d'eau, effectuées par l'organe simulateur de sol, constitué par l'association du corps absorbant 82 et de la coupelle 74 disposée sous lui. Dans ces conditions, ce réglage de l'inclinaison de la coupelle 74 a pour effet de déterminer le temps qu'il faut à l'environnement climatique du lieu pour amener le corps absorbant 82 de l'organe simulateur à être seul à retenir de l'eau. Par voie de conséquence, le temps d'évaporation de l'eau contenue dans ce corps et dans la coupelle étant fonction des seuls paramètres de cet environnement climatique (hygrométrie et température de l'air, intensité du soleil et force du vent), ce réglage de l'inclinaison de la coupelle 74 a pour finalité d'ajouter au terme fixe, déterminé par le seul corps absorbant 82, un terme d'ajustement, réglable en fonction de la réalité des lieux, dans la part de temps afférente au sol, comprise dans la durée totale de l'intervalle qui sépare deux arrosages consécutifs.

Au cours d'un arrosage, déclenché par le dispositif mécanique autonome 60, grâce à la présence de l'auvent 108, seule une fraction réglable de la quantité d'eau, qui tombe sur ce dispositif, est admise dans le corps absorbant 82. De la sorte, on peut aisément régler la durée d'arrosage, depuis une durée minimale, déterminée par la capacité de rétention d'eau du seul corps absorbant, qui en fixe le poids maximal, lorsque l'auvent de protection est en retrait, jusqu'à une durée maximale, lorsque cet auvent 108 est complètement déployé et protège la majeure partie du corps absorbant 82 de tout arrosage. Ce qui a pour effet direct d'augmenter le temps mis par ce corps absorbant pour atteindre son poids maximal.

Le comportement du dispositif 60 de commande d'arrosage extérieur, selon l'invention, décrit ci-dessus est toutefois conditionnel puisque soumis à l'état d'ensoleillement de la parcelle à arroser et, de ce fait, il peut être différent de ce qui vient d'être dit. En effet, dès que le rayonnement solaire devient trop important, l'élément thermostatique 88, protégé de la pluie, prend le contrôle de l'opération, dans des conditions déterminées par la position de la butée rétractable 102 à position réglable. Sous l'action d'un rayonnement solaire important, la température de la capsule 94 augment et le mélange thermo-sensible qu'elle contient se dilate. Dans ces conditions, lorsque le doigt 96 amène la butée réglable 102 à prendre contact avec le bras de levier 78 et ainsi à lui interdire de remonter au-dessus d'une position intermédiaire déterminée, aucune nouvelle commande d'arrosage ne peut se produire, au moins aussi longtemps qu'un rayonnement solaire important persiste. Lorsque le rayonnement solaire prend fin, le ressort à lame courbe 100 ramène le doigt 96 en position de repos.

La perte de poids du corps absorbant 74 du dispositif mécanique autonome 60 de commande d'arrosage peut également, selon l'invention, être représentative de l'assèchement du sol dû au vent. Cela est obtenu par le fait que ce dispositif 60 peut se comporter en girouette. Le corps absorbant 82, en forme de manchon, possède une surface totale d'évaporation importante et, ainsi orienté face au vent, il est à peu près représentatif du comportement du sol vis à vis du vent. Mais comme cette caractéristique n'est pas toujours nécessaire, le dispositif 60 pourra être alors fixé par tout moyen approprié sur la vanne 10 et l'empennage 106 sera supprimé.

Le corps absorbant 82 du dispositif mécanique autonome 110 de commande d'arrosage de plantes d'intérieur représenté à la figure 2 est uniquement sensible à l'hygrométrie et à la température du local concerné. Pour assurer une simulation correcte des bacs et jardinières du local, un bec d'arrosage goutte à goutte réglable, 118 est installé au-dessus du corps absorbant 82 et il lui fournit, par exemple, une ou deux gouttes par seconde (0,1 à 0,2 cm³/s). La durée d'arrosage du bac témoin est une durée de référence (de 15 à 20 minutes) qui dépend du débit précédent ainsi que du volume du corps absorbant 82 du dispositif d'arrosage 110. Cette durée de référence est le temps mis par ce corps absorbant pour passer d'un poids minimal à un poids maximal, sous l'effet de l'arrosage particulier qu'il reçoit. Pour l'arrosage de ces bacs et jardinières, des becs verseurs semplables au précédent mais à débits beaucoup plus importants (de 1 à 8 litres/heure, par exemple), sont utilisés. Les débits de ces becs verseurs sont ajustés en fonction de cette durée de référence et des volumes de terre respectifs des bacs et jardinières. Le fonctionnement du dispositif 110 de la figure 2 est, toutes choses égales par ailleurs, tout à fait identique à celui du dispositif 60 de la figure 1. L'intervalle entre deux arrosages dépend du seul environnement climatique des locaux concernés.

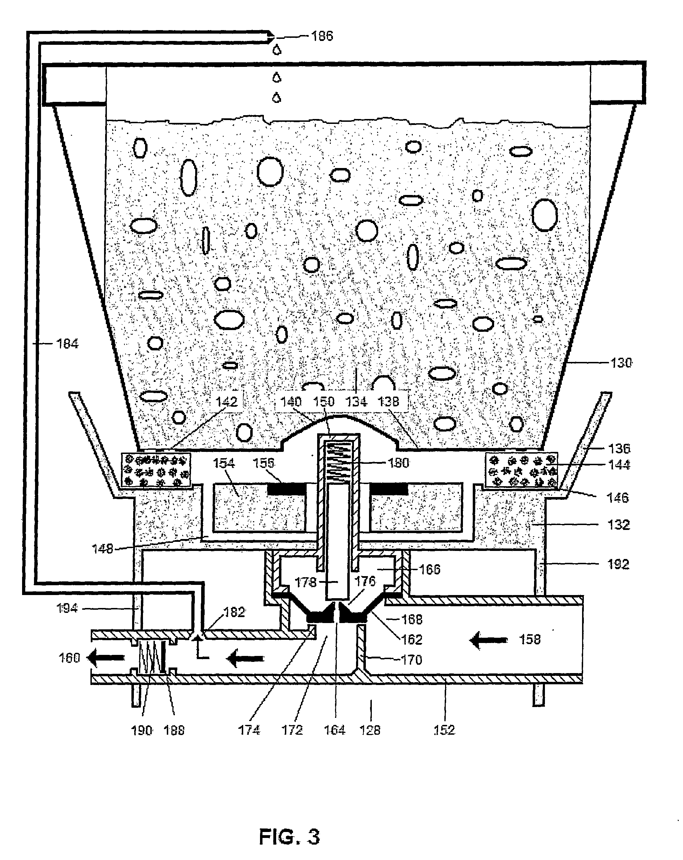

Selon la figure 3, est représenté un dispositif mécanique autonome de commande d'arrosage goutte à goutte 128, conforme à la troisième forme de réalisation de l'invention définie plus haut. Sur la figure 3, l'organe simulateur de sol comprend un bac témoin 130 et une cuvette associée 132. Le bac 130 est un article banal en plastique, disponible dans le commerce. Il est de forme tronconique et mesure par exemple 30 et 20 cm de diamètres supérieur et inférieur et 20 cm de haut. Il est destiné à contenir un échantillon de terre 134 et au moins une plante non représentée. Cet échantillon de terre est représentatif du sol et, dans le cas de bacs à arroser, au moins de la qualité de la terre de ces bacs. La cuvette 132 est un article original en plastique, à bord évasé 136, destiné à contenir de l'eau ainsi que le capteur qui déclenche le fonctionnement du dispositif mécanique autonome de commande d'arrosage selon l'invention.

Le fond 138 du bac témoin 130 est plat, avec une petite concavité 140 en son centre et une zone périphérique 142, comportant une série circulaire de trous. La zone perforée 142 repose sur une couronne 144 en feutre hydrophile, mesurant 2 cm de haut et 4 cm de large, installée sur le fond haut 146 en forme de couronne de la cuvette 132. La cuvette 132 possède en outre en son centre, un fond bas de forme circulaire 148, percé d'une ouverture centrale enserrant le fourreau 150 du noyau bistable d'une vanne mécanique 152, à commande magnétique. Autour du fourreau 150, est engagé libre un flotteur 154 ayant la forme d'un anneau, mesurant par exemple sept centimètres de diamètre extérieur, trois d'intérieur et deux d'épaisseur. Il est équipé d'un aimant annulaire central puissant 156, à polarisation axiale.

La vanne mécanique 152, à relais hydraulique de déclenchement, est constituée par une électrovanne du commerce, différente de la précédente mais à nouveau privée de son solénoïde de commande. Cette vanne 152 comprend un tronçon de conduit amont 158 et un tronçon de conduit aval 160, et elle est adaptée à être insérée à l'horizontale, entre une canalisation amont d'eau sous pression et un équipement d'arrosage installé en aval. La vanne 152 comprend une membrane en caoutchouc épais 162, percée en son centre d'un canal fin 164. La périphérie de la membrane 162 est circulaire et montée fixe sur les parois d'une chambre intermédiaire 166. Une partie de la membrane 162 sert d'obturateur à une ouverture 168 formée entre une cloison transversale courbe 170 et l'extrémité supérieure du tronçon amont 158 de la vanne 152. La cloison transversale courbe 170 forme une autre ouverture circulaire 172 avec le rebord supé-rieur 174 de l'extrémité amont du tronçon de conduit aval 160 de la vanne 152. La partie centrale de la membrane 162 sert d'obturateur à cette ouverture 172. Le canal fin 164 aboutit à la pointe d'un cône interne 176 et sur cette pointe est appliqué un noyau ferromagnétique 178, installé avec son ressort d'appui 180 dans le fourreau 150. En aval de l'ouverture 172, est installée une prise d'eau 182, raccordée par un petit tuyau 184 à un bec verseur 186, adapté à arroser goutte à goutte l'échantillon de terre 134 du bac témoin 130. En aval de cette prise d'eau 182 est installé un clapet anti-retour 188 muni de son ressort de rappel 190. Les tronçons de conduits amont et aval 158 et 160 de la vanne 152 sont engagés dans des ouvertures appropriées pratiquées dans les montants 192-194 des pieds de la cuvette 132.

Grâce à ces dispositions on réalise un autre dispositif mécanique autonome d'arrosage automatique particulièrement simple, efficace et bon marché. Tout d'abord, la seule pièce originale du simulateur de sol ainsi constitué est la cuvette, c'est-à-dire un article en plastique moulé relativement simple à fabriquer. Ensuite, l'élément mobile du capteur sensible à la teneur en eau du simulateur est ici un simple flotteur, porté par l'eau de réserve contenue dans la cuvette.

Lorsque le fond bas 148 de la cuvette 132 est à sec, le flotteur 154 repose sur ce fond et le champ magnétique de l'aimant 156 amène alors le noyau ferromagnétique 178 à s'élever et comprimer le ressort 180, pour intercepter un flux maximal. Ce qui a pour effet de mettre en communication la chambre intermédiaire 166 et l'aval de la cloison 170. Dans ces conditions, la pression de l'eau dans cette chambre 166 diminue pour égaler celle de l'eau en amont du clapet 188 repoussé par son ressort 190. Et malgré la raideur de la membrane 162, l'ouverture 168 s'ouvre sous la pression de l'eau d'alimentation de l'arrosage. A travers la prise d'eau 182 et le tuyau 184, le bec verseur 186 répand goutte à goutte de l'eau sur l'échantillon de terre 134 du bac témoin 130. Au bout de vingt minutes environ, cette eau atteint la partie basse de l'échantillon de terre 134. Ensuite, le surplus traverse la zone périphérique perforée 142 du fond du bac témoin 130 et aboutit dans le fond bas 148 de la cuvette 132. Lorsque, portés par cette eau dont le niveau s'élève lentement, le flotteur 154 et son aimant 156 sont remontés presque jusqu'en haut du fourreau 150, l'attirance magnétique exercée par cet aimant sur le noyau 178 devient inférieure à la force exercée par le ressort comprimé 180. Le noyau 178 est alors brusquement repoussé dans sa position basse. Ce qui a pour effet d'obturer le canal fin 164 et d'appliquer fortement la partie centrale de la membrane 162 sur l'ouverture 172 et sa partie latérale concernée sur l'ouverture 168. Ce qui entraîne la fermeture de la vanne 134 et la fin de l'arrosage. La durée de l'arrosage ainsi déterminée par le dispositif de commande selon l'invention est à nouveau une durée de référence, à partir de laquelle les débits des becs verseurs goutte à goutte respectivement associés aux bacs et pots à arroser sont ajustés en fonction du volume de terre de chacun.

Sous l'action du soleil, du vent et de l'aspiration exercée par les racines de la plante, l'échantillon de terre 134 du bac témoin 130 se déshydrate progressivement mais, à travers la couronne hydrophile 144 et les perforations de la zone périphérique 142, l'eau de réserve de la cuvette 132 est aspirée par capillarité par ce même échantillon de terre. Ce qui maintien sa teneur en eau à une valeur acceptable aussi longtemps que le niveau d'eau dans la cuvette 132 dépasse la face inférieure de la couronne en feutre 144. Cela peut durer plusieurs heures ou même plusieurs jours, notamment lorsque de la pluie remplace l'arrosage.

Dès que cette couronne 144 n'est plus en contact avec l'eau de la cuvette, elle se déshydrate progressivement et l'échantillon de terre 134 du bac témoin 130 fait de même pendant un certain temps. Ce temps est déterminé par celui qu'il faut à la petite quantité d'eau résiduelle contenue dans le fond bas de la cuvette 132 pour s'évaporer naturellement. Ces deux phases successives de teneur en eau décroissante puis de déshydratation temporaire de l'échantillon de terre 134 et la terre des bacs ou du sol à arroser, sont connues pour être bénéfiques à la santé des plantes, dès que le flotteur 154 repose sur le fond bas 148 de la cuvette 134, l'aimant 156 attire à nouveau le noyau ferromagnétique 178, la vanne 152 s'ouvre et un nouvel arrosage commence.

On remarquera que le remplacement de l'intercalaire hydrophile 144 par un intercalaire sec ou même la suppression pure et simple de ces intercalaires ne modifie pas fondamentalement le fonctionnement de l'organe simulateur de sol, constitué par le bac témoin 130 et sa cuvette associée 132. Ce fonctionnement est simplement moins bon puisque moins représentatif de ce qui se passe dans les bacs à arroser ou dans la couche superficielle cultivée et dans la couche sous-jacente du sol concerné.

On notera surtout que le bec verseur 186, adapté à délivrer goutte à goutte de l'eau sur l'échantillon de terre 134 du bac témoin 130, est simplement une première manière parmi trois d'exploiter la troisième forme de réalisation du dispositif mécanique autonome d'arrosage selon l'invention. Selon une deuxième manière de faire, il est en effet aisé de remplacer le bec verseur 186 par un petit tuyau délivrant un mince filet d'eau directement dans la cuvette 134. Dans ce cas, cette cuvette sera équipée d'un couvercle en forme de couronne traversé par le bac témoin 134, afin de minimiser au mieux l'évaporation de l'eau qu'elle contient. Les différents bacs à arroser seront équipés de même.

Selon une troisième manière de faire, le bec verseur 186 et le petit tuyau qui peut le remplacer sont écartés. Dans ce cas, lé bac témoin 130, le sol à arroser ou l'ensemble des bacs ou des pots de fleurs concernés (ceux disposés en rangs serrés d'une exploitation horticole, par exemple), sont soumis à un même arrosage par aspersion (qui sera de préférence pratiqué de nuit ou par temps couvert). Et les cuvettes de cet ensemble de bacs ou de pots pourront être supprimées. Dans ce troisième cas, le bac témoin devra être en accord avec trois impératifs : (1) avoir une surface minimale à définition relativement large (au moins une dizaine de décimètres carrés, par exemple), (2) contenir un échantillon de terre identique à la terre du sol, des bacs et des pots concernés et (3) avoir une hauteur qui correspond à la profondeur de ces bacs, de ces pots ou de la couche superficielle de terre cultivée de la parcelle de terrain concernée.

L'invention n'est pas limitée aux exemples de réalisation décrits et chacun des composants des trois dispositifs selon l'invention représentés peut avoir une forme de réalisation différente, dès lors que cette autre forme de réalisation est équivalente à celle décrite ici et correspond à la définition qui en est donnée dans les revendications ci-après.

A cet égard, on notera notamment que dans les exemples décrits, on utilise les composants non électriques de deux modèles particuliers d'électrovanne du commerce, du type à relais hydraulique de déclenchement. Bien évidemment, d'autres modèles d'électrovannes à relais hydraulique sont disponibles, qui fonctionnent parfaitement. Le remplacement par un aimant, en forme d'anneau ou de C, du solénoïde qu'elles comportent, fait en accord avec les revendications ci-après, permet de les incorporer à des dispositifs autonomes, purement mécaniques, de commande d'arrosage, selon l'invention.

Pour ce qui est du fléau de la première forme de réalisation de l'invention, il est évidemment possible de le réaliser avec deux bras de levier et de le monter sur pivot et, dans ce cas, de l'équilibrer au moyen d'un ressort tendu et/ou de masselottes.

Quant à la disposition au-dessus de la vanne 10, du dispositif mécanique autonome de commande d'arrosage d'intérieur 110, on notera qu'elle peut être inverse, comme cela est le cas sur la figure 1. Dans ce cas, une prise d'eau, pratiquée sur le tronçon de conduit aval 117, est raccordée à un conduit rigide, terminé par un bec verseur goutte à goutte 118, installé au-dessus du corps absorbant 82.

De même, dans le cas de la figure 3, il est possible d'installer la vanne 152 au fond du bac témoin 130, en pratiquant dans ce fond un passage pour le fourreau 150 du noyau ferromagnétique 178. Le bac témoin 130 sera pourvu de pieds de largeur et hauteur appropriées, le flotteur 154 sera installé entre ces pieds et la cuvette associée sera banale ou sensiblement identique à la cuvette 132 à deux niveaux de fonds. Le fonctionnement de cet ensemble sera très semblable à celui de la figure 3.

## Revendications

1. Dispositif mécanique autonome de commande d'arrosage comprenant :
- un organe simulateur (82 ; 130-132-134) représentatif du comportement, vis-à-vis de l'eau, du sol concerné, notamment de la teneur en eau de ce sol ;
- un capteur comportant un élément mobile sensible à cette teneur en eau ;
- des moyens solidaires de cet élément mobile, adaptés à déclencher le fonctionnement d'une vanne (30, 152);
- la vanne (10 ; 152), installée entre une source d'eau sous pression et au moins un équipement d'arrosage ;
- cette vanne comportant un relais hydraulique (20-30-32 ; 176), adapté à déclencher son ouverture ou sa fermeture ; **caractérisé en ce que** :
- ce relais hydraulique est équipé d'un pointeau de commande, solidaire d'un noyau ferromagnétique associé à un ressort ;
- l'élément mobile du capteur comporte un aimant (80 ; 156) à déplacement vertical, adapté à faire prendre deux positions stables à ce noyau ferromagnétique, cet aimant étant un anneau à polarisation axiale, engagé libre autour d'un fourreau du noyau ferromagnétique de la vanne.

2. Dispositif mécanique autonome de commande d'arrosage selon la revendication 1, **caractérisé en ce que** l'aimant (80 ou 156) est en forme de O ou C, de manière à pouvoir être engagé autour du fourreau du noyau ferromagnétique (48 ou 178).

3. Dispositif mécanique autonome de commande d'arrosage selon l'une des revendications 1 ou 2, **caractérisé en ce que** :
- le capteur d'humidité est un bras de levier rigide en plastique (78), monté en porte-à-faux oscillant autour d'un axe fixe (76) ;
- le corps absorbant (82) est un composant spongieux synthétique de petites dimensions, monté fixe sur l'extrémité libre du bras de levier (78) ;
- l'aimant (80) est installé dans la partie centrale du bras de levier (78) entre le corps absorbant (82) et un ressort (84) adapté à équilibrer le poids de ce corps, lorsque celui-ci possède une teneur en eau déterminée.

4. Dispositif mécanique autonome (60) de commande d'arrosage par aspersion, selon la revendication 3, **caractérisé en ce que** :
- organe simulateur comprend en outre, au moins sous la totalité du corps absorbant (82), une coupelle allongée (74), notablement plus large que lui ;
- la partie basse du corps absorbant (82) peut s'engager dans la coupelle (74) et prendre appui sur son fond :
- la coupelle (74) est montée inclinable autour d'un axe longitudinal (72).

5. Dispositif mécanique autonome (60) de commande d'arrosage par aspersion, selon la revendication 4, **caractérisé en ce qu'**un organe thermostatique (88), sensible au rayonnement solaire et protégé de la pluie, est installé fixe au-dessus du bras de levier (78), afin de pouvoir bloquer la remontée de ce bras, lorsque l'intensité de ce rayonnement dépasse un seuil, déterminé par une butée rétractable (102) à position réglable et, dans le cas contraire, à laisser ce bras remonter.

6. Dispositif mécanique autonome (60), de commande d'arrosage par aspersion, selon la revendication 4, **caractérisé en ce qu'**au-dessus du corps absorbant (82) est installé un auvent coulissant (108), constituant pour ce corps un parapluie à déploiement variable.

7. Dispositif mécanique autonome (60), de commande d'arrosage par aspersion, selon les revendications 4, 5 et 6, **caractérisé en ce que** :
- il comprend un cadre rigide en forme de U couché, ayant deux branches horizontales (62-66) et un montant vertical (64) :
- la branche supérieure (66) sert d'appui pour l'organe thermostatique (88) ;
- la branche supérieure (66) sert également d'appui pour l'auvent coulissant (108) ;
- la branche inférieure (62) sert d'appui pour le ressort d'équilibrage (84) ;
- la branche inférieure (62) est percée d'un trou (68) traversé par le fourreau (42) du noyau (48) et du pointeau (52) ;
- la branche inférieure (62) comporte un support (70) pour l'axe de rotation (72) de la coupelle (74) ;
- le montant vertical (64) sert de support pour l'axe fixe (76) du bras de fléau (78).

8. Dispositif mécanique autonome (60), de commande d'arrosage par aspersion, selon la revendication 7, **caractérisé en ce que** :
- la branche supérieure (66) du cadre rigide du dispositif (60) comporte un trou dans lequel est engagé libre un ergot (104) fixé sur le fond (44) du fourreau (42) ;
- la face inférieure de cette branche (66) est installée en appui sur un pivot constitué par le fond (44) du fourreau (42) et le cadre tout entier est monté en rotation libre autour de ce fourreau (42) ;
- un empennage (106) est fixé au montant (64) et/ou à la branche supérieure (66) de ce cadre.

9. Dispositif mécanique autonome (110), selon la revendication 3, pour commander le déclenchement et la durée d'arrosage goutte à goutte, notamment de bacs (124) et/ou de jardinières (126), **caractérisé en ce que** le tronçon (117) de conduit (12) disposé en aval de la vanne (10) est pourvu d'une prise d'eau, raccordée à un bec d'arrosage goutte à goutte préréglé (118), installé au-dessus du corps absorbant (82).

10. Dispositif mécanique autonome (110) de commande d'arrosage goutte à goutte, selon la revendication 9, **caractérisé en ce que** :
- il comprend un cadre rigide en forme de U droit, ayant deux montants verticaux (114-116) et une base horizontale (112) ;
- la base horizontale (112) sert d'appui pour le ressort d'équilibrage (86) ;
- le montant vertical (114) sert de support pour l'axe fixe (76) du bras de fléau (78).

11. Dispositif mécanique autonome d'arrosage (128), selon la revendication 1 ou 2, **caractérisé en ce que** :
- l'organe simulateur de sol comprend un bac témoin (130) et une cuvette associée (132) ;
- le bac témoin (130) est destiné à contenir un échantillon de terre (134) et au moins une pfante ; l'échantillon de terre (134) est représentatif du sol à arroser et, dans le cas de bacs ou de pots, au moins de la qualité de la terre qu'ils contiennent ;
- la cuvette (132) est destinée à contenir de l'eau ;
- le fond (138) du bac témoin comporte une ou plusieurs zones périphériques percèe(s) de trous (142) qui repose(nt) sur le fond (146) de la cuvette (132), de préférence par l'intermédiaire d'un ou de plusieurs intercalaires (144) ;
- l'élément mobile du capteur est un flotteur (154), installé libre dans un logement central aménagé entre le fond (148) de la cuvette (132) et le fond (138) du bac témoin (130) ;
- le flotteur (154) est équipé d'un aimant en anneau (156), engagé autour du fourreau (150) du noyau bistable (178) de commande du relais hydraulique (162-164-178) de la vanne (152).

12. Dispositif mécanique autonome d'arrosage (128), selon la revendication 11, **caractérisé en ce que** :
- l'équipement d'arrosage installé en aval de la vanne (152) étant un ensemble de becs verseurs adaptés à laisser tomber goutte à goutte de l'eau sur la terre de bacs ou de pots ;
- le débit du bec verseur (186) du bac témoin (130) et le volume de terre (134) de ce bac déterminent une durée de référence pour l'arrosage de ces bacs ou pots ;
- le débit du bec verseur de chaque bac ou pot à arroser est ajusté en fonction de cette durée de référence et du volume particulier de terre de ce bac ou de ce pot.

13. Dispositif mécanique autonome d'arrosage (128), selon la revendication 11, **caractérisé en ce que** :
- l'équipement d'arrosage installé en aval de la vanne (152) étant un ensemble de becs verseurs, adaptés à laisser couler de minces filets d'eau directement dans les cuvettes des bacs ou des pots à arroser ;
- le bec verseur de la cuvette (132) associée au bac témoin (130) est identique aux précédents ;
- chacune des cuvettes est équipée d'un couvercle en forme de couronne, pour minimiser l'évaporation de son eau ;
- le débit du bec verseur de la cuvette (132) du bac témoin (130) et le volume de terre (134) de ce bac déterminent une durée de référence pour l'arrosage de ces bacs ou pots ;
- le débit du bec verseur de la cuvette de chaque bac ou pot à arroser est ajusté en fonction de cette durée de référence et du volume particulier de terre de ce bac ou de ce pot.

14. Dispositif mécanique autonome d'arrosage (128), selon la revendication 11, **caractérisé en ce que**:
- l'équipement d'arrosage installé en aval de la vanne (152) étant un dispositif d'arrosage par aspersion d'une parcelle de terrain ou d'un ensemble de bacs ou de pots ;
- le bac témoin (130) et sa cuvette associée (132) sont installés dans la zone aspergée ;
- le bac témoin possède une surface minimale à définition relativement large ;
- l'échantillon de terre du bac témoin est identique à la terre du sol, des bacs ou des pots ;
- la hauteur de l'échantillon de terre du bac témoin correspond sensiblement à la profondeur de ces bacs ou de ces pots et, dans le cas d'une parcelle de terrain, à la profondeur de la couche superficielle cultivée.

15. Dispositif mécanique autonome d'arrosage (128), selon la revendication 11, **caractérisé en ce que** les intercalaires (144) installés entre les zones périphériques (142) percées de trous du bac témoin (130) et le fond (146) de la cuvette associée (132) ont une hauteur relativement importante, permettant d'aménager un logement approprié pour le flotteur (154) monté libre autour du fourreau (150) du noyau bistable (178) de la vanne (152).

16. Dispositif mécanique autonome d'arrosage (128), selon la revendication 15, **caractérisé en ce que** la cuvette associée (132) comporte un fond à deux niveaux, un fond haut (146) en couronne sur lequel reposent des intercalaires à forte capillarité (144) et un fond bas central (148) sur lequel peut reposer le flotteur (154).

17. Dispositif mécanique autonome d'arrosage (128), selon la revendication 11, **caractérisé en ce que** le bac témoin (130) possède soit des pieds relativement larges et hauts, à fonds percés de trous, soit un fond présentant une concavité centrale (140) et une périphérie (142) comportant plusieurs séries de trous.

18. Dispositif mécanique autonome d'arrosage (128), selon la revendication 11, **caractérisé en ce que** la cuvette (132) comporte, d'une part, un fond (148) percé d'une ouverture centrale dont les bords enserrent le fourreau (150) du noyau bistable (178) de la vanne (152) et, d'autre part, des pieds (192-194) aménagés pour servir de supports fixes aux tronçons de conduits amont (158) et aval (160) de la vanne (152).

## Patentansprüche

1. Autonome mechanische Vorrichtung (60 oder 110) zur gesteuerten Bewässerung umfassend:
- einen Boden-Simulator (82; 130-132-143), der für das Verhalten des betreffenden Bodens repräsentativ ist, insbesondere für den Gehalt an Wasser in diesem Boden;
- einen Sensor, mit einem mobilen, wasserempfindlichen Element;
- wobei dieses Elements gemeinsame Mittel aufweist, die ausgebildet sind, um die Funktion eines Ventils (10, 152) auszulösen,
- wobei das Ventil (10, 152) zwischen einer Druckwasserquelle und wenigstens einer Bewässerungsanlage installiert ist,
- wobei dieses Ventil ein hydraulisches Steuerrelais (20-30-32; 176) aufweist, das ausgebildet ist, um das Relais zu öffnen oder zu schießen;
**dadurch gekennzeichnet, dass**
- das hydraulische Steuerrelais mit einer Ventilnadel ausgestattet ist, die mit einem ferromagnetischen Kern federverbunden ist;
- wobei das mobile Element des Sensors einen Magneten (80 ; 158) zur vertikalen Verschiebung umfasst, ausgebildet, um zwei stabile Zustände des ferromagnetischen Kerns herzustellen, wobei der Magnet ein Ring mit axialer Polarisation darstellt, in freiem Umgriff um eine Hülse des ferromagnetischen Kerns des Ventils.

2. Autonome mechanische Vorrichtung zur gesteuerten Bewässerung gemäß Anspruch 1, **dadurch gekennzeichnet, dass** der Magnet (80, 156) in einer O- oder C- Form ausgebildet ist, um in Umgriff um eine Hülse des ferromagnetischen Kerns (48 oder 178) gebracht werden zu können.

3. Autonome mechanische Vorrichtung zur gesteuerten Bewässerung gemäß einem der Ansprüche 1 oder 2, **dadurch gekennzeichnet, dass**:
- der Feuchtesensor ein starrer Kunststoffhebelarm (78) ist, der auskragend an eine feste Achse (78) hin-und her bewegbar befestigt ist;
- der absorbierende Körper (82) eine Zusammensetzung aus schwammigen synthetischen Komponenten kleiner Abmessung ist, der am freien Ende des Hebelarms (78) angebracht ist;
- der Magnet (80) im Zentralabschnitt des Hebelarms (78) zwischen dem absorbierenden Körper (82) und einer Feder (84) angeordnet ist, die ausgebildet ist, um das Gewichts des Körpers auszugleichen.

4. Autonome mechanische Vorrichtung (60) zur gesteuerten Bewässerung gemäß Anspruch 3, **dadurch gekennzeichnet, dass**:
- der Boden-Simulator unter anderem wenigstens unter dem gesamten absorbierenden Körper (82) eine längliche Schale (74) aufweist, die größer ist, als dieser;
- die untere Partie des absorbierenden Körpers (82) kann sich in die Schale erstrecken und kann dort an der Unterseite aufliegen;
- die Schale (74) ist schwenkbar um eine longitudinale Achse (72).

5. Autonome mechanische Vorrichtung (60) zur gesteuerten Bewässerung gemäß Anspruch 4, **dadurch gekennzeichnet, dass** ein in Bezug auf Sonnenlicht empfindliches Thermostatelement (88), das vor Regen geschützt ist, fest über dem Hebelarm (78) montiert ist, um das Ansteigen des Arms zu blockieren, sobald die Intensität des Sonnenlichts einen Schwellwert überschreitet, durch einen einziehbaren Anschlag (102) mit einstellbarer Position und im umgekehrten Fall, um den Arm zurückkehren zu lassen.

6. Autonome mechanische Vorrichtung (60) zur gesteuerten Bewässerung gemäß Anspruch 4, **dadurch gekennzeichnet, dass** über dem absorbierenden Körper (82) ein Schiebedeckel (108) installiert ist, um für den Körper einen variablen Regenschirm zu bilden.

7. Autonome mechanische Vorrichtung (60) zur gesteuerten Bewässerung gemäß den Ansprüchen 4, 5 und 6, **dadurch gekennzeichnet, dass**:
- er einen starren Rahmen in Form eines flachen U umfasst, der zwei horizontale Arme (62 - 66) und einen vertikale Abschnitt (64) aufweist;
- der obere Arm (66) dient als Auflager für das Thermostatelement (88);
- der obere Arme (66) dient gleichermaßen als Auflager des Schiebedeckels (108);
- der untere Arm (62) dient als Auflager für die Gleichgewichtsfeder (84);
- der untere Arm (62) ist mit einer Öffnung (68) versehen, durch die Hülse (42) des Kerns (48) und der Nadel (52) hindurchgehen;
- der untere Arm (62) umfasst einen Träger (70) für die Rotationsache (72) der Schale (74);
- der vertikale Abschnitt (64) dient als Halterung für die feste Ache (76) des Hebelarms (78).

8. Autonome mechanische Vorrichtung (60) zur gesteuerten Bewässerung gemäß Anspruch 7, **dadurch gekennzeichnet, dass**:
- der obere Arm (66) des starren Rahmens der Vorrichtung (60) eine Öffnung umfasst, durch die ein Stift (104) frei hindurch ragt, der auf dem Boden (44) der Hülse (42) befestigt ist;
- die untere Fläche dieses Arms (66) ist auf einem Drehlager installiert, der durch den Boden (44) der Hülse (42) gebildet wird und der gesamte Rahmen ist frei drehbar um die Hülse (42) herum montiert;
- ein Stabilisator (106) ist an dem Abschnitt (64) und/oder am oberen Arm (66) des Rahmens befestigt.

9. Autonome mechanische Vorrichtung (110) gemäß Anspruch 3 zur Steuerung des Einsetzens und der Dauer einer Tropfenbewässerung, einschließlich von Kästen und/oder Gärten, **dadurch gekennzeichnet, dass** der Rohrabschnitt (117), welcher dem Ventil (10) nachgeschaltet ist, mit einer Wasserversorgung verbunden ist, die mit einem voreingestellten Mundstück (118) zur Tropfenbewässerung versehen ist, welches oberhalb des absorbierenden Körpers (82) angebracht ist.

10. Autonome mechanische Vorrichtung (110) zur Steuerung des Einsetzens und der Dauer einer Tropfenbewässerung gemäß Anspruch 9,
**dadurch gekennzeichnet, dass**:
- es umfasst einen starren Rahmen in einer rechten U-Form, welches zwei vertikale Abschnitte (114-116) und eine horizontale Basis (112) aufweist;
- die horizontale Basis (112) dient zur Auflage der Gleichgewichtsfeder (86);
- der vertikale Abschnitt (114) dient zur Halterung der festen Achse (76) des Hebelarms (78).

11. Autonome mechanische Bewässerungs-Vorrichtung (128) gemäß den Ansprüchen 1 oder 2, **dadurch gekennzeichnet, dass**:
- der Boden-Simulator umfasst einen Testkasten (130) und eine dazugehörende Wanne (132);
- der Testkasten (130) ist bestimmt, um ein Bodenprobe (134) aufzunehmen und wenigstens eine Pflanze; die Bodenprobe (134) ist repräsentativ für den zu bewässernden Boden und im Fall von Kasten oder Töpfen wenigstens für die Qualität der darin enthaltene Erde;
- die Wanne (132) ist bestimmt, um Wasser aufzunehmen;
- der Boden (138) des Kastens umfasst eine oder mehrere peripheren Zonen versehenen mit Öffnungen (142), der(die) auf dem Boden der Wanne (132) aufliegen, vorzugsweise auf einem oder mehreren Abstandshalter (144);
- das bewegliche Element des Sensors ist ein Schwimmer (154), der frei auf dem zentralen Gehäuse, zwischen dem Boden der Wanne (132) und dem Boden (138) des Kastens (130) montiert ist;
- der Schwimmer ist mit einem Ringmagneten (156) ausgestattet, der um die Hülse des bistabilen Kerns (178) des hydraulischen Steuerrelais (162 - 164 - 178) des Ventils (152) angeordnet ist.

12. Autonome mechanische Bewässerungs-Vorrichtung (128) gemäß dem Anspruch 11, **dadurch gekennzeichnet, dass**:
- die Bewässerungsanlag, die stromabwärts des Ventils (152) installiert ist, weist ein Ensemble von Ausgießern aus, ausgebildet, um Wassertropfen in die Kasten oder Behälter abtropfen zu lassen;
- die Abflussmenge des Ausgießer (186) des Testkasten (130) und das Volumen der Erde (134) dieses Kastens bestimmt eine Referenz-Zeitdauer für die Bewässerung dieser Kästen oder Töpfe;
- die Abflussmenge jedes zu bewässernden Kastens oder Topfes ist in Abhängigkeit dieser Referenz-Zeitdauer und des tatsächlichen Volumens der Erde dieser Kästen oder dieser Töpfe eingestellt.

13. Autonome mechanische Bewässerungs-Vorrichtung (128) gemäß dem Anspruch 11, **dadurch gekennzeichnet, dass**:
- die Bewässerungsanlage, die stromabwärts des Ventils (152) installiert ist, weist ein Ensemble von Ausgießern aus, ausgebildet, um dünne Wasserfäden direkt in die zu bewässernde Kasten oder Behälter hineinfließen zu lassen;
- der Ausgießer der Wanne (132) die zu dem Testkasten(130) gehört ist identisch zu den vorherigen;
- jede der Wannen ist mit einem ringförmigen Deckel ausgestattet, um die Verdampfung des Wassers zu minimieren;
- die Abflussmenge des Ausgießers der Wanne (132) und das Volumen der Erde (134) dieses Kastens bestimmt eine Referenzzeit für die Bewässerung dieser Kästen oder Töpfe;
- die Abflussmenge der Ausgießer von jedem zu bewässernden Kasten oder Topf ist in Abhängigkeit dieser Referenz-Zeitdauer und des tatsächlichen Volumens der Erde dieses Kastens oder dieses Topfes eingestellt.

14. Autonome mechanische Bewässerungs-Vorrichtung (128) gemäß dem Anspruch 11, **dadurch gekennzeichnet, dass**:
- die Bewässerungsanlage, die stromabwärts des Ventils (152) installiert ist, umfasst eine Sprühvorrichtung für eine Geländeparzelle oder ein Ensemble an Kästen oder Töpfen;
- der Testkasten (130) und seine damit verbundene Wanne (132) sind im Bereich der Sprühvorrichtung installiert;
- der Testkasten besitzt eine minimale Oberfläche in einer breiten Definition;
- die Bodenprobe des Testkastens ist identisch mit der Erde der Kästen oder Töpfe;
- die Höhe der Bodenprobe des Testkastens entspricht im Wesentlichen der Tiefe der Kästen und Töpfe und im Fall einer Geländeparzelle der kultivierten Oberflächenschicht.

15. Autonome mechanische Bewässerungs-Vorrichtung (128) gemäß dem Anspruch 11, **dadurch gekennzeichnet, dass** die Abstandhalter (144), die zwischen den peripheren Zonen (142) des Testkastens (130) mit den Öffnungen und dem Boden (146) der korrespondierenden Wanne (132) angeordnet sind, eine signifikante relative Höhe aufweisen, um es zu ermöglichen, ein für den Schwimmer (154) passendes unabhängiges Gehäuse um die Hülse (150) des Kerns (178) des Ventils (152) vorzusehen.

16. Autonome mechanische Bewässerungs-Vorrichtung (128) gemäß dem Anspruch 15, **dadurch gekennzeichnet, dass** die zugehörige Wanne (132) einen Boden mit zwei Niveaus, einen hohen kranzförmigen Boden (146) auf dem die Abstandhalter mit hoher Kapillarwirkung ruhen und einen niedrigen zentralen Boden (148) auf dem der Schwimmer (154) ruhen kann.

17. autonome mechanische Bewässerungs-Vorrichtung (128) gemäß dem Anspruch 11, **dadurch gekennzeichnet, dass** der Testkasten (130) entweder relativ große und hohe Füße besitzt, am mit Löcher durchsetzten Boden, oder eine Basis mit einer zentralen Konkavität (140) und einen peripheren Bereich (142) mit mehreren Reihen von Löchern.

18. Autonome mechanische Bewässerungs-Vorrichtung (128) gemäß dem Anspruch 11, **dadurch gekennzeichnet, dass** die Wanne (132) zum einen einen Boden (148) aufweist, der mit einer zentralen Öffnung durchsetzt ist dessen Ränder die Hülse (150) des bistabilen Kerns (178) des Ventils (152) umschließen und zum anderen Füße (192-194) angeordnet sind, um als feste Auflage für die Leitung stromaufwärts (158) und das Ventil (152) stromabwärts zu dienen.

## Claims

1. An autonomous mechanical watering control device comprising:
- a simulator member (82;130-1.32-134) representative of the behaviour in relation to water of the soil in question, in particular the water content of said soil;
- a sensor comprising a mobile element sensitive to said water content;
- means which are fixed with respect to said mobile element and which are adapted to trigger operation of a valve (30, 152);
- the valve (10; 151) installed between a pressure water source and at least one watering assembly;
- said valve comprising a hydraulic relay (20-30-32;176) adapted to trigger its opening or its closing; **characterised in that**:
- said hydraulic relay is equipped with a control needle fixed with respect to a ferromagnetic core associated with a spring;
- the mobile element of the sensor comprises a magnet (80; 156) which is vertically displaceable and which is adapted to cause said ferromagnetic core to assume two stable positions, said magnet being an axial-polarisation ring engaged freely around a sleeve of the ferromagnetic core of the valve.

2. An autonomous mechanical watering control device according to claim 1 **characterised in that** the magnet (80 or 156) is in the shape of an 0 or a C, so that it can be engaged around the sleeve of the ferromagnetic core (48 or 178).

3. An autonomous mechanical watering control device according to one of claims 1 and 2 **characterised in that**:
- the humidity sensor is a rigid plastic lever arm (78) mounted in oscillating cantilever relationship about a fixed axis (76);
- the absorbent body (82) is a synthetic spongy component of small dimensions which is mounted fixedly on the free end of the lever arm (78); and
- the magnet (80) is installed in the central part of the lever arm (78) between the absorbent body (82) and a spring (84) adapted to balance the weight of said body when it has a given water content.

4. An autonomous mechanical sprinkling watering control device (60) according to claim 3 **characterised in that**:
- the simulator member further comprises at least beneath the whole of the absorbent body (82) an elongate cup (74) which is notably wider than same;
- the lower part of the absorbent body (82) can engage into the cup (74) and be supported on its bottom; and
- the cup (74) is mounted inclinably about a longitudinal axis (72).

5. An autonomous mechanical sprinkling watering control device (60) according to claim 4 **characterised in that** a thermostatic element (88) which is sensitive to solar radiation and protected from rain is fixedly installed above the lever arm (78) so that it can block the rising movement of said arm when the intensity of said radiation exceeds a threshold determined by a retractable adjustable-position abutment (102) and in the opposite case to allow said arm to rise.

6. An autonomous mechanical sprinkling watering control device (60) according to claim 4 **characterised in that** installed above the absorbent body (82) is a sliding hood (108) which for said body forms a variable-deployment umbrella.

7. An autonomous mechanical sprinkling watering control device (60) according to claims 4, 5 and 6 **characterised in that**:
- it comprises a rigid frame in the form of a horizontal U having two horizontal arms (62-66) and a vertical upright (64);
- the upper arm (66) serves as a support for the thermostatic member (88);
- the upper arm (66) also serves as a support for the sliding hood (108);
- the lower arm (62) serves as a support for the balancing spring (84);
- the lower arm (62) is pierced with a hole (68) through which the sleeve (42) of the core (48) and the needle (52) pass;
- the lower arm (62) comprises a support (70) for the shaft (72) for rotation of the cup (74); and
- the vertical upright (64) serves as a support for the fixed shaft (76) of the balance arm (78).

8. An autonomous mechanical sprinkling watering control device (60) according to claim 7 **characterised in that**:
- the upper arm (66) of the rigid frame of the device (60) comprises a hole into which there is freely engaged a lug (104) fixed on the bottom (44) of the sleeve (42);
- the lower face of said arm (66) is installed in supported relationship on a pivot formed by the bottom (44) of the sleeve (42) and the entire frame is mounted freely rotatably about said sleeve (42); and
- a tail assembly (106) is fixed to the upright (64) and/or to the upper arm (66) of said frame.

9. An autonomous mechanical device (110) according to claim 3 for controlling triggering and duration of watering drop by drop, in particular for pots and/or plant boxes (125), **characterised in that** the portion (117) of conduit (12) disposed downstream of the valve (10) is provided with a water intake connected to a pre-regulated drop-by-drop watering spout (118) installed above the absorbent body (82).

10. An autonomous mechanical device (110) for controlling drop-by-drop watering according to claim 9 **characterised in that**:
- it comprises a rigid frame in the form of an upright U having two vertical uprights (114-116) and a horizontal base (112);
- the horizontal base (112) serves as a support for the balancing spring (86); and
- the vertical upright (114) serves as a support for the fixed shaft (76) of the balance arm (78).

11. An autonomous mechanical watering device (128) according to claim 1 or claim 2 **characterised in that**:
- the soil simulator member comprises a reference pot (130) and an associated bowl (132);
- the reference pot (130) is intended to contain an earth sample (134) and at least one plant; the earth sample (134) is representative of the soil to be watered and, in the case of pots or tubs, at least the amount of earth that they contain;
- the bowl (132) is intended to contain water;
- the bottom (138) of the reference pot comprises one or more peripheral zones pierced by holes (142) resting on the bottom (146) of the bowl (132), preferably by way of one or more inserts (144);
- the mobile element of the sensor is a float (154) installed freely between a central housing provided between the bottom (148) of the bowl (132) and the bottom (138) of the reference pot (130); and
- the float (154) is fitted with a ring-shaped magnet (156) engaged around the sleeve (150) of the bistable control core (178) of the hydraulic relay (162-164-178) of the valve (152).

12. An autonomous mechanical watering device (128) according to claim 11 **characterised in that**:
- the watering assembly installed downstream of the valve (152) being an assembly of pouring spouts adapted to allow water to drip drop-by-drop on the earth of pots or tubs;
- the flow rate of the pouring spout (188) of the reference pot (130) and the volume of earth (134) of said pot determine a reference duration for watering of said pots or tubs; and
- the flow rate of the pouring spout of each pot or tub to be watered is adjusted in dependence on said reference duration and the particular volume of earth of said pot or tub.

13. An autonomous mechanical watering device (128) according to claim 11 **characterised in that**:
- the watering assembly installed downstream of the valve (152) being an assembly of pouring spouts adapted to allow thin streams of water to flow directly into the bowls of the pots or tubs to be watered;
- the pouring spout of the bowl (132) associated with the reference pot (130) is identical to the foregoing ones;
- each of said bowls is equipped with a ring-shaped cover to minimise evaporation of its water;
- the flow rate of the pouring spout of the bowl (132) of the reference pot (130) and the volume of earth (134) of said pot determine a reference duration for watering of said pots or tubs; and
- the flow rate of the pouring spout of the bowl of each pot or tub to be watered is adjusted in dependence on said reference duration and the particular volume of earth of said pot or tub.

14. An autonomous mechanical watering device (128) according to claim 11 **characterised in that**:
- the watering assembly installed downstream of the valve (152) being a sprinkling watering device for sprinkling a piece of land or an assembly of pots or tubs;
- the reference pot (130) and its associated bowl (132) are installed in the sprinkled zone;
- the reference pot is of a minimal surface area of relatively broad definition;
- the sample of earth of the reference pot is identical to the earth of the soil in the pots or tubs; and
- the height of the earth sample of the reference pot substantially corresponds to the depth of said pots or tubs and in the case of a piece of land to the depth of the cultivated surface layer.

15. An autonomous mechanical watering device (128) according to claim 11 **characterised in that** the inserts (144) fitted between the peripheral zones (142) pierced with holes of the reference pot (130) and the bottom (146) of the associated bowl (132) are of a relatively substantial height permitting the provision of a suitable housing for the float (154) which is mounted freely around the sleeve (150) of the bistable core (178) of the valve (152).

16. An autonomous mechanical watering device (128) according to claim 15 **characterised in that** the associated bowl (132) comprises a bottom having two levels, an upper bottom (146) of ring shape, on which rest inserts (144) of high capillarity, and a lower central bottom (148) on which the float (154) can rest.

17. An autonomous mechanical watering device (128) according to claim 11 **characterised in that** the reference pot (130) has either relatively wide and high feet with bottoms pierced with holes, or a bottom having a central concavity (140) and a periphery (142) comprising a plurality of series of holes.

18. An autonomous mechanical watering device (128) according to claim 11 **characterised in that** the bowl (132) comprises on the one hand a bottom (148) pierced with a central opening whose edges embrace the sleeve (150) of the bistable core (178) of the valve (152) and on the other hand feet (192-194) arranged to serve as fixed supports for the conduit portions which are upstream (158) and downstream (160) of the valve (152).
